# EUROPÄISCHE PATENTSCHRIFT

(11) **EP 0 817 510 B1**
(45) Veröffentlichungstag und Bekanntmachung des Hinweises auf die Patenterteilung: **30.07.2003**
(21) Anmeldenummer: 97401190.0
(22) Anmeldetag: 29.05.1997
(51) Int. Cl.: H04Q 3/00

(54) **Verfahren zum Aufbau einer Verbindung sowie Vermittlungsstelle, Dienstrechner und Kommunikationsnetz**
Procedure for the construction of a connection, and centre for communications, calculator and communication net
Procédé pour la construction d'une connexion et unité de communication, avec calculateur et réseau de communication

(30) Priorität: 30.05.1996 DE 19621716
(43) Veröffentlichungstag der Anmeldung: 07.01.1998
(73) Patentinhaber: ALCATEL, 75008 Paris (FR)
(72) Erfinder: Weik, Hartmut, 70195 Stuttgart (DE)
(74) Vertreter: Brose, Gerhard, Dipl.-Ing.

(56) Entgegenhaltungen:
- US-A- 5 023 868
- US-A- 5 051 992
- US-A- 5 375 167

## Beschreibung

Die Erfindung betrifft ein Verfahren zum Aufbau einer Verbindung nach dem Oberbegriff von Anspruch 1, eine Vermittlungsstelle eines Kommunikationsnetzes nach dem Oberbegriff von Anspruch 6, einen Dienstrechner für ein oder für mehrere Kommunikationsnetze nach dem Oberbegriff von Anspruch 7 und ein Kommunikationsnetz nach dem Oberbegriff von Anspruch 9.

In dem US Patent Nummer 5,5375,167 beschreibt Bruce M. Bales et. al. ein Telekommunikations-Switchingsystem mit einer verteilten Wählplanhierarchie. Dieses System hat durch hierarchisches verteilen von Nummemblöcken eine vorteilhafte Verbindungsstruktur. Insbesondere beschreibt Bales et. al., dass auf Anfrage Switching Nodes Nummemblöcke an andere Switching Nodes delegieren können.

Strategien für den Aufbau von Verbindungen in einer Überlastsituation eines Kommunikationsnetzes sind vor allem aus dem Bereich der privaten Kommunikationsnetze bekannt.

Die Erfindung geht nun von einem üblichen gattungsgemäßen Verbindungsaufbauverfahren aus, wie es in privaten Nebenstellen-Netzen, beispielsweise Firmennetzen, verwendet wird, die über mehrere Netzzugänge zu einem öffentlichen Fernsprechnetz verfügen. Dieses Verfahren wird beispielsweise in dem Artikel 'Vernetzte TK-Anlagen ohne Grenzen von Hilmar Dehlen, ntz , Bd. 45 (1992) Heft 9 auf den Seiten 714 bis 720 beschrieben.

Das private Kommunikationsnetz wird von mehreren über Querleitungs-Bündel vermaschten Nebenstellen-Vermittlungseinrichtungen gebildet. Die einzelnen Nebenstellen-Vermittlungseinrichtungen verfügen jeweils über einen Netzzugang zu dem öffentlichen Fernsprechnetz. Erhält nun eine Nebenstellen-Vermittlungseinrichtung eine Verbindungsanforderung, die eine Verbindung zu einem Endgerät einer anderen Nebenstellen-Vermittlungseinrichtung des privaten Netzes anfordert, und besteht ein Engpaß in dem privaten Netz zum Aufbau der angeforderten Verbindung über Wege des privaten Netzes, so erfolgt automatisch ein Überlauf in das öffentliche Fernsprechnetz, d. h. , die Verbindungsanforderung wird von der Nebenstellen-Vermittlungseinrichtung an das öffentliche Fernsprechnetz weitergeleitet und eine Verbindung zu dem angeforderten Endgerät über das öffentliche Fernsprechnetz aufgebaut.

Dieses Verbindungsaufbauverfahren hat den Nachteil, daß im Überlastfall erhebliche Kosten durch die Nutzung des öffentlichen Fernsprechnetzes entstehen und es keinerlei Möglichkeiten gibt, eine gleichmäßigere Auslastung des privaten Kommunikationsnetzes zu erreichen.

Der Erfindung liegt nun die Aufgabe zugrunde, ein Verbindungsaufbauverfahren für ein überlastetes Netz anzugeben, das eine kostenmäßige oder verkehrsmäßige Optimierung der Leitweglenkung im Überlastfall erlaubt.

Diese Aufgabe wird gelöst durch ein Verfahren zum Aufbau einer Verbindung nach der Lehre von Anspruch 1, durch eine Vermittlungsstelle nach der Lehre von Anspruch 6, durch einen Dienstrechner für ein oder für mehrere Kommunikationsnetze nach der Lehre von Anspruch 7 sowie durch ein Kommunikationsnetz nach der Lehre von Anspruch 9.

Der Erfindung liegt der Gedanke zugrunde, in einer Überlastsituation die Verbindungsanforderung endgeräteindividuell zu behandeln, d. h. endgeräteindividuell zu entscheiden, ob oder auf welches von mehreren andere Kommunikationsnetze die Verbindungsanforderung umzuleiten und damit ob oder über welches Kommunikationsnetz die angeforderte Verbindung aufzubauen ist. Daraus ergibt sich der Vorteil, daß ein teilnehmerindividuelles Profil in Bezug auf die im Überlastfall entstehenden Kosten festgelegt werden kann und daß durch gezielte Wahl von endgeräteindividuellen Parametern das Teilnehmerverhalten im Überlastfall so gesteuert werden kann, daß eine gleichmäßigere Netzauslastung erreicht wird.

Ein weiterer Vorteil der Erfindung ist, daß sie nicht nur in einer Kommunikationsumgebung mit einem privaten und einem öffentlichen Fernsprechnetz einsetzbar ist. Die Erfindung ist vielmehr in einer beliebigen heterogenen Netzumgebung mit mehreren privaten und/oder öffentlichen Kommunikationsnetzen oder virtuellen Kommunikationsnetzen einsetzbar. Dadurch werden durch sie insbesondere Forderungen an ein Verbindungsaufbauverfahren erfüllt, die durch eine deregulierte, heterogene Kommunikationsumgebung entstehen.

Im folgenden wird die Erfindung anhand zweier Ausführungsbeispiele unter Zuhilfenahme beiliegender Zeichnungen beispielhaft erläutert.
- Fig. 1: zeigt ein Blockschaltbild einer Kommunikationsumgebung mit einem erfindungsgemäßen Kommunikationsnetz.
- Fig. 2: zeigt ein Flußdiagramm des erfindungsgemäßen Verbindungsaufbauverfahrens für das Kommunikationsnetz nach Fig. 1.

In dem ersten Ausführungsbeispiel wird nun die Durchführung des erfindungsgemäßen Verbindungsaufbauverfahrens in einem erfindungsgemäßen Kommunikationsnetz erläutert, das mit einer erfindungsgemäßen Vermittlungsstelle versehen ist.

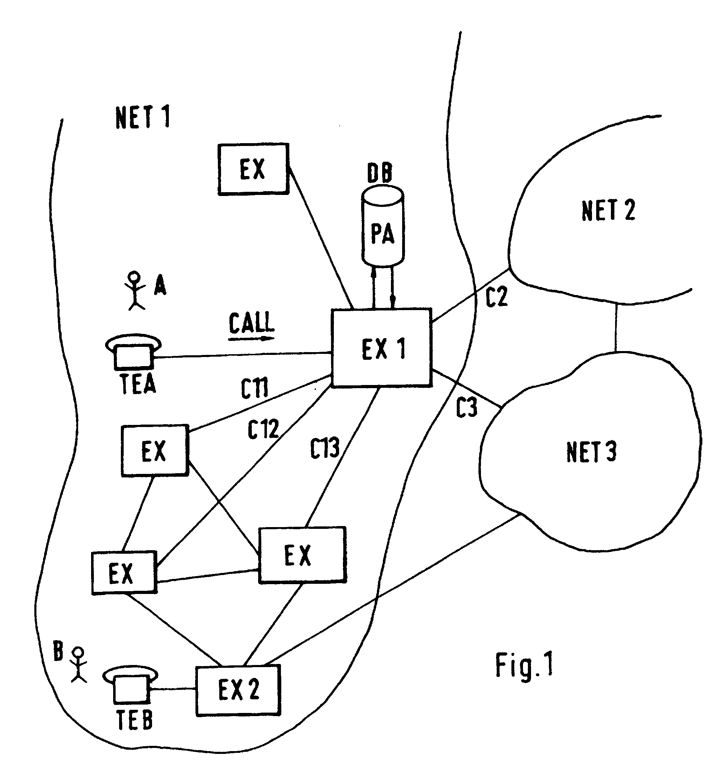

Fig. 1 zeigt drei Kommunikationsnetze NET1 bis NET3, die untereinander verbunden sind.

Die Kommunikationsnetze NET2 und NET3 sind öffentliche Kommunikationsnetze zweier unterschiedlicher Netzbetreiber. Das Kommunikationsnetz NET1 ist ein privates Kommunikationsnetz. Es ist jedoch auch möglich, daß es sich bei dem Kommunikationsnetz NET1 um ein öffentliches Kommunikationsnetz eines dritten Netzbetreibers handelt. Bei den Kommunikationsnetzen NET2 und NET3 könnte es sich auch um zwei verschiedene private Kommunikationsnetze handeln.

Das Kommunikationsnetz NET1 weist mehrere Vermittlungsstellen EX, EX1 und EX2 und zwei Endgeräte TEA und TEB auf, die einem Teilnehmer A bzw. einem Teilnehmer B zugeordnet sind. Die Endgeräte TEA und TEB sind mit den Vermittlungsstellen EX1 bzw. EX2 verbunden. Die Vermittlungsstellen EX1 und EX2 sind über mehrere Vermittlungsstellen EX miteinander verbunden. Die Vermittlungsstelle EX1 ist über zwei Netzzugänge C2 und C3 mit den Kommunikationsnetzen NET2 bzw. NET3 verbunden. Die Vermittlungsstelle EX2 ist mit dem Kommunikationsnetz NET3 verbunden.

Bei den Endgeräten TEA und TEB handelt es sich um übliche Fernsprechendgeräte, beispielsweise um Telefone, Faxe oder mit einem Modem oder einer entsprechenden Schnittstellenkarte versehenen Datenverarbeitungseinrichtungen. Es kann sich hierbei um analoge oder um digitale (ISDN = Integrated Services Digital Network) Endgeräte handeln.

Bei den Vermittlungseinrichtungen EX, EX1 und EX2 handelt es sich um übliche Fernsprechvermittlungsstellen, vorzugsweise um Nebenstellen-Vermittlungseinrichtungen. Diese Vermittlungseinrichtungen sind über physikalische Verbindungsleitungen des Kommunikationsnetzes NET1 oder über physikalische Verbindungsleitungen, die von einem der Kommunikationsnetze NET 2 und NET3 angemietet worden sind, miteinander vermascht. Es ist auch möglich, daß es sich bei dem Kommunikationsnetz NET1 um ein virtuelles Kommunikationsnetz handelt, bei dem die Vermittlungsstellen EX, EX1 und EX2 teilweise über Wähl-Leitungen der Kommunikationsnetze NET2 und NET3 miteinander verbunden sind.

Von den Vermittlungsstellen des Kommunikationsnetzes NET1 ist die Vermittlungsstelle EX1 besonders ausgestaltet. Sie verfügt über eine Datenbank DB, in der für jedes an die Vermittlungsstelle EX1 angeschlossene Endgerät (in Fig. 1 ist von diesen Endgeräten nur beispielhaft das Endgerät TEA gezeigt) Parameter abgespeichert sind, die den Verbindungsaufbau im Fall einer Überlastsituation beeinflussen. Wird von der Vermittlungsstelle EX1 bei der Durchführung des Verbindungsaufbaus eine solche Überlastsituation festgestellt, so führt sie den Verbindungsaufbau aufgrund dieser Parameter über eines der anderen Kommunikationsnetze NET2 und NET3 durch oder nicht durch.

Es ist hierbei vorteilhaft, daß die Vermittlungsstelle EX1 den Verbindungsaufbau im Überlastfall für angeforderte Verbindungen steuert, die zwischen einem der an sie angeschlossenen Endgeräte und einem anderen Endgerät des Kommunikationsnetzes NET1 aufzubauen sind. Es ist jedoch auch möglich, daß die Vermittlungsstelle EX1 auch den Verbindungsaufbau im Überlastfall für Verbindungen steuert, die zwischen einem der an sie angeschlossenen Endgeräte und einem Endgerät eines anderen Kommunikationsnetzes aufzubauen sind. Wird eine entsprechende Verbindungsanforderung an sie weitergeleitet, so ist es auch möglich, daß die Vermittlungsstelle EX1 auch den Verbindungsaufbau für die Verbindungen zwischen beliebigen Endgeräten beliebiger Kommunikationsnetze steuert.

Um die ihr im Rahmen des erfindungsgemäßen Verbindungsaufbauverfahrens zufallenden Funktionen zu erfüllen, verfügt die Vermittlungsstelle EX1 neben den in Vermittlungsstellen üblichen Mitteln zum Empfang einer Verbindungsaufforderung über eine zusätzliche Steuereinheit, die der Ermittlung der für eine Verbindungsanforderung zur Verfügung stehenden Kapazität im Kommunikationsnetz NET1 sowie der Steuerung und der Auswahl von alternativen Verbindungen dient.

Diese Steuereinheit wird von Steuerprogrammen gebildet, die zusätzlich auf der üblichen hard- und softwaremäßigen Steuerplattform der Vermittlungsstelle EX1 ablaufen. Die Gestaltung dieser Programme wird durch den unten detailliert beschriebenen Ablauf der Verbindungsaufbauverfahrens spezifiziert.

Es ist auch möglich, daß weitere oder alle Vermittlungsstellen des Kommunikationsnetzes NET1 wie die Vermittlungsstelle EX1 ausgestaltet sind.

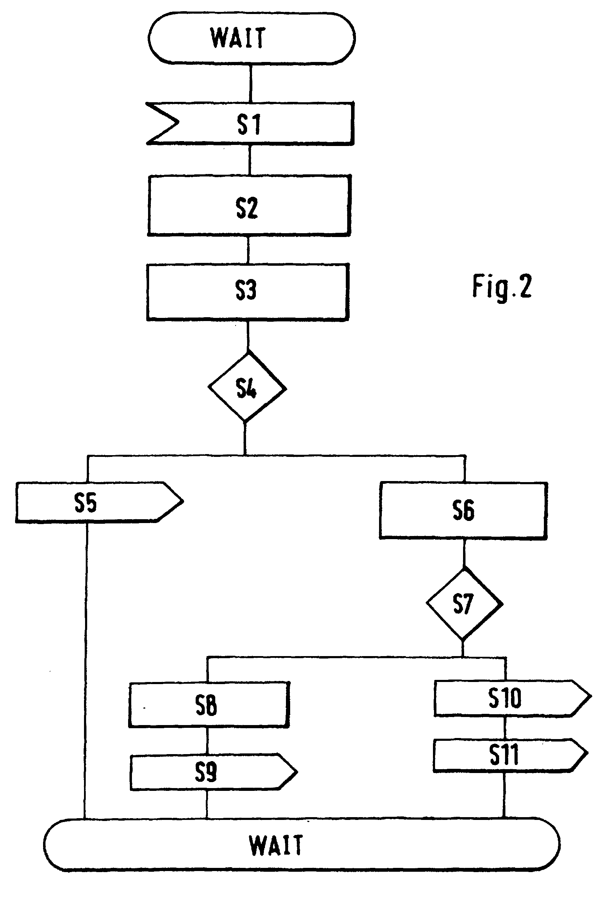

Im folgenden wird nun der detaillierte Ablauf des Verbindungsaufbauverfahrens im Überlastfall anhand von Fig. 2 erläutert.

Fig. 2 zeigt ein Ablaufdiagramm, das die Funktion der zusätzlichen Steuereinheit der Vermittlungsstelle EX1 beschreibt. Das Ablaufdiagramm weist einen Zustand WAIT und elf Schritte S1 bis S11 auf.

Der Zustand WAIT stellt einen Wartezustand dar, in dem die Steuereinheit auf die Ankunft einer Verbindungsanforderung wartet.

Der Teilnehmer A wählt nun den Teilnehmer B an. Das ihm zugeordnete Endgerät TEA sendet daraufhin eine Verbindungsanforderung CALL an die Vermittlungsstelle EX1, die das Endgerät TEB als gerufenes Endgerät spezifiziert. Im Schritt S1 erkennt die Steuereinheit die Ankunft der Verbindungsanforderung CALL und leitet den Schritt S2 ein.

Im Schritt S2 überprüft die Steuereinheit anhand der in der Verbindungsanforderung CALL eingetragenen Rufnummer, ob eine Verbindung zu einem Endgerät des Kommunikationsnetzes NET1 oder zu einem der anderen Kommunikationsnetze NET2 und NET3 aufgebaut werden soll. Handelt es sich um eine interne Verbindungsanforderung, so wird zum Schritt S3 übergegangen.

Im Schritt S3 überprüft die Vermittlungsstelle EX1, ob ausreichend freie Kapazität im Kommunikationsnetz NET1 vorhanden ist, um die angeforderte Verbindung im Kommunikationsnetz NET1 in Richtung zum Endgerät TEB aufzubauen. Hierfür überprüft sie den Belegungszustand von für den Aufbau der angeforderten Verbindung in Frage kommenden Querleitungsbündel C11, C12 und C13. Läßt der Belegungszustand der Querleitungsbündel C11 bis C13 den Aufbau der angeforderten Verbindungen nicht zu, so entscheidet sich die Steuereinheit im Schritt S4, in den Schritt S6 überzugehen. Anderenfalls geht sie in den Schritt S5 über.

Es ist auch möglich, daß die Steuereinheit EX1 den vollständigen Aufbau einer Verbindung zwischen den Vermittlungsstellen EX1 und EX2 für mehrere mögliche Verbindungswege vollständig überprüft, bevor sie die Entscheidung des Schrittes S4 trifft.

Ist die Verbindungsanforderung CALL nicht an ein Endgerät des Kommunikationsnetzes NET1 gerichtet, so wird die Überprüfung des Schrittes S3 nicht durchgeführt und die Verbindungsanforderung über den entsprechenden Netzzugang an das entsprechende angeforderte Kommunikationsnetz weitergeleitet.

Im Schritt S5 wird die Verbindungsanforderung über dasjenige der Querleitungsbündel C11 bis C13 weitergeleitet, das über ausreichend freie Kapazität zum Aufbau der angeforderten Verbindung verfügt. Anschließend geht die Steuereinheit wieder in den Wartezustand über. Durch die Weiterleitung der Verbindungsanforderung wird im folgenden sodann die angeforderte Verbindung zwischen dem Endgerät TEA und TEB intern über Verbindungswege des Kommunikationsnetzes NET1 aufgebaut.

Im Schritt S6 werden die dem Endgerät TEA in der Datenbank DB zugeordneten Parameter PA durch die Steuereinheit ermittelt. Diese Parameter geben an, ob für das anfordernde Endgerät TEA ein alternativer Verbindungsweg über ein anderes Kommunikationsnetz, also über die Kommunikationsnetze NET2 oder NET3, aufgebaut werden soll oder nicht. Durch die Zuordnung dieser Parameter zu den an die Vermittlungsstelle EX1 angeschlossenen Endgeräte ist es somit möglich, ein endgeräteindividuelles Profil in Bezug auf die Priorität und die Kosten im Überlastzustand aufzubauen. Diese Parameter können beispielsweise durch Einrichtung eines Teilnehmer-Leistungsmerkmals "Berechtigung" in einer Nebenstellenanlage eingerichtet werden.

Es ist auch möglich, daß den Endgeräten anstelle dieser Parameter oder zusätzlich zu diesen Parametern folgende Parameter zugeordnet werden:
- Parameter, die angeben, über welches von mehreren der anderen Kommunikationsnetze NET2 und NET3 eine alternative Verbindung aufgebaut werden soll. Die Verwendung solcher Parameter ist insbesondere dann sinnvoll, wenn es sich bei den anderen Kommunikationsnetzen um Kommunikationsnetze unterschiedlicher Netzbetreiber handelt, die unterschiedliche Übertragungskosten in Rechnung stellen und unterschiedliche Erreichbarkeiten bietet.
- Parameter, die eine Prioritätsabfolge angeben, in welcher Reihenfolge ein alternativer Aufbau über verschiedene der anderen Kommunikationsnetze NET2 und NET3 versucht wird.

Im Schritt S7 wird nun aufgrund der für das anfordernde Endgerät ermittelten Parameter entschieden, ob eine Verbindung über einen Alternativweg aufzubauen ist bzw. über welches andere Kommunikationsnetz NET2 oder NET3 eine alternative Verbindung aufzubauen ist. Ist gemäß der Parameter keine alternative Verbindung aufzubauen, so wird in dem Schritt S10 übergeleitet. Ansonsten wird in den Schritt S8 übergeleitet.

Im Schritt S8 wird ein alternativer Verbindungsweg über ein anderes Kommunikationsnetz NET2 oder NET3 ermittelt. Hierfür ist es insbesondere notwendig, daß die Vermittlungsstelle EX1 über entsprechende Daten über Netzzugänge des Kommunikationsnetzes NET1 und die möglichen Verbindungsnetze NET2 und NET3 zwischen diesen Netzzugängen verfügt.

Im Schritt S9 wird sodann die entsprechend veränderte Verbindungsanforderung an das ausgewählte Kommunikationsnetz NET3 über den Netzübergang C3 weitergeleitet. Im folgenden wird sodann eine alternative Verbindung zwischen dem Endgerät TEA und dem TEB über das Kommunikationsnetz NET3 aufgebaut. Die Steuereinheit geht sodann in den Warte-Zustand WAIT über.

Im Schritt S10 erfolgt das Senden einer Nachricht an das anfordernde Endgerät TEA, die einen Überlastzustand des Kommunikationsnetzes NET1 anzeigt. Diese Nachricht kann über einen Signalisierungskanal übertragen werden oder beispielsweise als Sprachansage über den Nutzkanal übertragen werden.

Im Schritt S11 wird sodann die Verbindung zwischen dem Endgerät TEA und der Vermittlungsstelle EX1 ausgelöst. Die Steuereinheit geht sodann in den Warte-Zustand WAIT über.

Es ist auch möglich, daß nach dem Anzeigen des Überlastzustandes ein Verbindungsaufbau durch das Senden einer entsprechenden Steuernachricht vom Endgerät TEA eingeleitet werden kann. In einem zweiten Ausführungsbeispiel wird nun die Durchführung des erfindungsgemäßen Verfahrens zum Aufbau einer Verbindung in einer Überlastsituation in einem erfindungsgemäßen Kommunikationsnetz erläutert, das über einen erfindungsgemäßen Dienstrechner verfügt. Die Kommunikationsumgebung ist im zweiten Ausführungsbeispiel ebenfalls nach Fig. 1 gestaltet. Der Unterschied zum ersten Ausführungsbeispiel besteht lediglich darin, daß die zusätzliche Steuereinheit nicht in der Vermittlungsstelle EX1, sondern in einer von einem erfindungsgemäßen Dienstrechner gebildeten Dienststeuereinrichtung angesiedelt ist, die mit der Vermittlungsstelle EX1 verbunden ist. Die Vermittlungsstelle EX1 bildet hierbei eine Dienstvermittlungsstelle (SSP = Service Switching Point), die mit der Dienststeuereinrichtung (SCP = Service Control Point) gemäß dem IN-Konzept (IN = Intelligent Network) kommuniziert. Es ist hierbei auch möglich, daß die Dienststeuereinrichtung auch mit weiteren Vermittlungsstellen EX und EX2 des Kommunikationsnetzes NET1 verbunden sind, die ebenfalls über eine solche Dienstvermittlungs-Funktion verfügen.

Die zusätzliche Steuereinheit der Vermittlungsstelle EX1 nach Fig. 1 und Fig. 2 ist somit in den Dienstrechner integriert und führt die Steuerung des Verbindungsaufbaus im Überlastfall für die an der Vermittlungsstelle EX1 oder für die an mehreren Vermittlungsstellen des Kommunikationsnetzes NET1 ankommenden Verbindungsanforderungen durch. Dies hat den Vorteil, daß nur eine zentrale Datenbank DB für das Kommunikationsnetz NET1 notwendig ist, die allen Endgeräten des Kommunikationsnetzes NET1 Parameter zuordnet.

Es ist auch möglich, daß eine solche Dienststeuereinrichtung mit Vermittlungsstellen unterschiedlicher Kommunikationsnetze verbunden ist und somit das erfindungsgemäße Verbindungsaufbauverfahren zentral für mehrere Kommunikationsnetze steuert.

## Patentansprüche

1. Verfahren zum Aufbau einer Verbindung, bei dem ein anforderndes Endgerät (TEA) eine Verbindungsanforderung (CALL) an eine Steuereinheit eines ersten Kommunikationsnetzes (NET1) signalisiert und bei dem die Steuereinheit ermittelt, ob ausreichend freie Kapazität zum Aufbau der durch die Verbindungsanforderung angeforderten Verbindung in dem ersten Kommunikationsnetz (NET1) vorhanden ist,
**dadurch gekennzeichnet, daß** die Steuereinheit im Falle nicht ausreichender Kapazität aufgrund von dem anfordernden Endgerät (TEA) zugeordneten Parametern (PA) einen alternativen Aufbau der angeforderten Verbindung über ein anderes, zweites Kommunikationsnetz (NET2) veranlaßt.

2. Verfahren nach Anspruch 1,
**dadurch gekennzeichnet, daß** die Verbindungsanforderung (CALL) von einem Endgerät (TEA) des ersten Kommunikationsnetzes (NET1) signalisiert wird.

3. Verfahren nach Anspruch 1 oder 2,
**dadurch gekennzeichnet, daß** die Verbindungsanforderung (CALL) den Aufbau einer Verbindung zu einem angeforderten Endgerät (TEB) des ersten Kommunikationsnetzes (NET1) anfordert.

4. Verfahren nach einem der Ansprüche 1 bis 3,
**dadurch gekennzeichnet, daß** die Parameter (PA) anzeigen, ob für das jeweilige anfordernde Endgerät (TEA) eine alternative Verbindung aufgebaut werden darf oder nicht.

5. Verfahren nach einem der Ansprüche 1 bis 4,
**dadurch gekennzeichnet, daß** die Parameter (PA) anzeigen, über welches von mehreren anderen Kommunikationsnetzen (NET2, NET3) die alternative Verbindung aufgebaut werden darf.

6. Vermittlungsstelle (EX1) eines ersten Kommunikationsnetzes (NET1) mit Mitteln zum Empfang einer Verbindungsanforderung (CALL) von einem anfordernden Endgerät (TEA) und mit einer Steuereinheit, die mit Mitteln zum Ermitteln, ob ausreichend freie Kapazität zum Aufbau der durch die Verbindungsanforderung (CALL) angeforderter Verbindung in dem ersten Kommunikationsnetz (NET1) vorhanden ist, versehen ist,
**dadurch gekennzeichnet, daß** die Steuereinheit so ausgestaltet ist, daß, wenn keine ausreichende freie Kapazität ermittelt wird, aufgrund von dem anfordernden Endgerät (TEA) zugeordneten Parametern (PA) von der Steuereinheit ein alternativer Aufbau der angeforderten Verbindung über ein anderes, zweites Kommunikationsnetz (NET2) veranlaßt wird.

7. Dienstrechner für ein erstes Kommunikationsnetz oder für mehrere Kommunikationsnetze mit Mitteln zum Empfang von Daten einer Verbindungsanforderung von einem anfordernden Endgerät und mit einer Steuereinheit, die mit Mitteln zum Ermitteln, ob ausreichend freie Kapazität zum Aufbau der durch die Verbindungsanforderung angeforderter Verbindung in dem ersten Kommunikationsnetz oder in einem ersten der mehreren Kommunikationsnetze vorhanden ist, versehen ist,
**dadurch gekennzeichnet, daß** die Steuereinheit so ausgestaltet ist, daß, wenn keine ausreichende freie Kapazität ermittelt wird, aufgrund von dem anfordernden Endgerät zugeordneten Parametern von der Steuereinheit ein alternativer Aufbau der angeforderten Verbindung über ein anderes, zweites Kommunikationsnetz veranlaßt wird.

8. Dienstrechner nach Anspruch 7,
**dadurch gekennzeichnet, daß** der Dienstrechner eine Dienststeuereinheit ist, die mit mindestens einer Dienstvermittlungsstelle des ersten Kommunikationsnetzes oder jedes der mehreren Kommunikationsnetze verbunden ist.

9. Kommunikationsnetz mit einem ersten Kommunikationsnetz (NET1) und einem zweiten Kommunikationsnetz (NET2), bei dem ein anfordemdes Endgerät (TEA) so ausgestaltet ist, dass es eine Verbindungsanforderung (CALL) an eine Steuereinheit des ersten Kommunikationsnetzes (NET1) signalisiert, und die Steuereinheit über Komponenten verfügt, die so ausgestaltet sind, dass sie ermitteln, ob ausreichend freie Kapazität zum Aufbau der durch die Verbindungsanforderung angeforderten Verbindung in dem ersten Kommunikationsnetz (NET1) vorhanden ist, **dadurch gekennzeichnet, dass** die Steuereinheit über weitere Komponenten verfügt, die so ausgestaltet sind, dass sie im Falle nicht ausreichender Kapazität aufgrund von dem anfordemden Endgerät (TEA) zugeordneten Parametern (PA) einen alternativen Aufbau der angeforderten Verbindung über das andere, zweite Kommunikationsnetz (NET2) veranlassen.

## Claims

1. A method for setting up a connection, in which a requesting station (TEA) signals a connection request (CALL) to a control unit of a first communications network (NET1) and in which the control unit determines whether there is sufficient free capacity in the first communications network (NET1) for setting up the connection requested by the connection request,
**characterized in that** in the event of insufficient capacity, and based on parameters (PA) assigned to the requesting station (TEA), the control unit arranges an alternative setup of the requested connection over another, second communications network (NET2).

2. A method according to Claim 1,
**characterized in that** the connection request (CALL) is signalled by a station (TEA) of the first communications network (NET1).

3. A method according to Claim 1 or 2,
**characterized in that** the connection request (CALL) requests the setup of a connection to a requested station (TEB) of the first communications network (NET1).

4. A method according to one of Claims 1 to 3,
**characterized in that** the parameters (PA) indicate whether or not an alternative connection may be set up for the respective requesting station (TEA).

5. A method according to one of Claims 1 to 4,
**characterized in that** the parameters (PA) indicate over which of several other communications networks (NET2, NET3) the alternative connection may be set up.

6. A switching centre (EX1) of a first communications network (NET1) with means for receiving a connection request (CALL) from a requesting station (TEA) and with a control unit that is equipped with means of determining whether there is sufficient free capacity in the first communications network (NET1) for setting up the connection requested by the connection request (CALL),
**characterized in that** the control unit is developed in such a way that if insufficient free capacity is found, then based on parameters (PA) assigned to the requesting station (TEA) the control unit arranges an alternative setup of the requested connection over another, second communications network (NET2).

7. A server for a first communications network or for several communications networks with means of receiving data of a connection request from a requesting station and with a control unit that is equipped with means of determining whether there is sufficient free capacity in the first communications network or in a first of the several communications networks for setting up the connection requested by the connection request,
**characterized in that** the control unit is developed in such a way that if insufficient free capacity is found, then based on parameters assigned to the requesting station the control unit arranges an alternative setup of the requested connection over a different, second communications network.

8. A method according to Claim 7,
**characterized in that** the server is a service control unit, which is connected to at least one service switching point of the first communications network or of each of the several communications networks.

9. A communications network with a first communications network (NET1) and a second communications network (NET2), in which a requesting station (TEA) is developed in such a way that it signals a connection request (CALL) to a control unit of the first communications network (NET1), and the control unit has components which are developed in such a way that they determine whether there is sufficient free capacity in the first communications network (NET1) for setting up the connection requested by the connection request,
**characterized in that** the control unit has further components, which are developed in such a way that in the event of insufficient capacity, and based on parameters (PA) assigned to the requesting station (TEA), they arrange an alternative setup of the requested connection over the other, second communications network (NET2).

## Revendications

1. Procédé pour établir une liaison, d'après lequel un terminal appelant (TEA) signale une demande de liaison (CALL) à une unité de commande d'un premier réseau de communications (NET1), et d'après lequel l'unité de commande détermine s'il existe, dans le premier réseau de communications (NET1), une capacité libre suffisante pour l'établissement de la liaison demandée par la demande de liaison,
**caractérisé en ce que** l'unité de commande, dans le cas d'une capacité insuffisante, sur la base de paramètres (PA) associés au terminal appelant (TEA), provoque l'établissement alternatif de la liaison demandée, par l'intermédiaire d'un autre, à savoir un second réseau de communications (NET2).

2. Procédé selon la revendication 1, **caractérisé en ce que** la demande de liaison (CALL) est signalée par un terminal (TEA) du premier réseau de communications (NET1).

3. Procédé selon la revendication 1 ou 2, **caractérisé en ce que** la demande de liaison (CALL) demande l'établissement d'une liaison vers un terminal demandé ou appelé (TEB) du premier réseau de communications (NET1).

4. Procédé selon l'une des revendications 1 à 3, **caractérisé en ce que** les paramètres (PA) indiquent pour le terminal appelant (TEA) considéré, si l'établissement d'une liaison alternative est autorisé ou non.

5. Procédé selon l'une des revendications 1 à 4, **caractérisé en ce que** les paramètres (PA) indiquent par l'intermédiaire duquel de plusieurs autres réseaux de communications (NET2, NET3), l'établissement de la liaison alternative est autorisé.

6. Central de commutation (EX1) d'un premier réseau de communications (NET1) comprenant des moyens pour la réception d'une demande de liaison (CALL) en provenance d'un terminal appelant (TEA), et comprenant une unité de commande pourvue de moyens destinés à déterminer s'il existe, dans le premier réseau de communications (NET1), une capacité libre suffisante pour l'établissement de la liaison demandée par la demande de liaison (CALL),
**caractérisé en ce que** l'unité de commande est d'une configuration telle, que dans le cas où la capacité libre déterminée est insuffisante, l'unité de commande, sur la base de paramètres (PA) associés au terminal appelant (TEA), provoque l'établissement alternatif de la liaison demandée, par l'intermédiaire d'un autre, à savoir un second réseau de communications (NET2).

7. Calculateur de services pour un premier réseau de communications ou plusieurs réseaux de communications, comprenant des moyens pour la réception de données d'une demande de liaison en provenance d'un terminal appelant, et comprenant une unité de commande pourvue de moyens destinés à déterminer s'il existe, dans le premier réseau de communications ou dans un premier des plusieurs réseaux de communications, une capacité libre suffisante pour l'établissement de la liaison demandée par la demande de liaison,
**caractérisé en ce que** l'unité de commande est d'une configuration telle, que dans le cas où la capacité libre déterminée est insuffisante, l'unité de commande, sur la base de paramètres associés au terminal appelant, provoque l'établissement alternatif de la liaison demandée, par l'intermédiaire d'un autre, à savoir un second réseau de communications.

8. Calculateur de services selon la revendication 7, **caractérisé en ce que** le calculateur de services est une unité de commande de services qui est reliée à au moins un central de commutation du premier réseau de communications ou de chacun des plusieurs réseaux de communications.

9. Réseau de communications avec un premier réseau de communications (NET1) et un second réseau de communications (NET2), dans lequel un terminal appelant (TEA) est d'une configuration telle, qu'il signale une demande de liaison (CALL) à une unité de commande du premier réseau de communications (NET1), et l'unité de commande dispose de composants qui sont d'une configuration telle, qu'ils déterminent s'il existe, dans le premier réseau de communications (NET1), une capacité libre suffisante pour l'établissement de la liaison demandée par la demande de liaison,
**caractérisé en ce que** l'unité de commande dispose d'autres composants qui sont d'une configuration telle, que dans le cas d'une capacité insuffisante, ils provoquent, sur la base de paramètres (PA) associés au terminal appelant (TEA), l'établissement alternatif de la liaison demandée, par l'intermédiaire de l'autre, second, réseau de communications (NET2).
